Europäisches Patentamt

European Patent Office

Office européen des brevets

(11) Veröffentlichungsnummer : **0 383 156 B1**

(12) **EUROPÄISCHE PATENTSCHRIFT**

(45) Veröffentlichungstag der Patentschrift :
24.06.92 Patentblatt 92/26

(21) Anmeldenummer : **90102316.8**

(22) Anmeldetag : **06.02.90**

(51) Int. Cl.⁵ : **C02F 1/52,** C01F 7/04

(54) **Verfahren zur Eliminierung von Phosphaten und organisch gebundenem Phosphor aus Abwässern und Zulaufwässern.**

Die Akte enthält technische Angaben, die nach dem Eingang der Anmeldung eingereicht wurden und die nicht in dieserPatentschrift enthalten sind.

(30) Priorität : **15.02.89 DE 3904575**

(43) Veröffentlichungstag der Anmeldung :
**22.08.90 Patentblatt 90/34**

(45) Bekanntmachung des Hinweises auf die Patenterteilung :
**24.06.92 Patentblatt 92/26**

(84) Benannte Vertragsstaaten :
**AT BE CH DE ES FR GB GR IT LI LU NL SE**

(56) Entgegenhaltungen :
**DE-A- 2 318 653
DE-A- 2 443 889
DE-A- 3 709 950
US-A- 3 656 889**

(56) Entgegenhaltungen :
**R. HELMER et al.: "Weitergehende Abwasser-reinigung", Deutscher Fachschriften-Verlag, Braun & Co. K.G., Mainz - Wiesbaden,DE CHEMICAL ABSTRACTS, Band 98, Nr. 22, 30. Mai 1983, Seite 332, Zusammenfassung Nr. 184968z, Columbus, Ohio, US; D. COUIL-LARD:"Phosphate removal from water using wastes arising from aluminum-reducing indu-stries".**

(73) Patentinhaber : **NALCO CHEMICAL COMPANY One Nalco Center
Naperville Illinois 60566-1024 (US)**

(72) Erfinder : **Lehmkuhl, Josef
Im Klingen 38
W-6238 Hofheim/Taunus (DE)**

(74) Vertreter : **Ruschke, Hans Edvard, Dipl.-Ing. et al
Patentanwälte Ruschke & Partner
Pienzenauerstrasse 2
W-8000 München 80 (DE)**

EP 0 383 156 B1

**Beschreibung**

Die Phosphateliminierung aus Abwässern ist eine der vorrangigsten Umweltschutzmaßnahmen zum Schutz fließender und stehender Gewässer. Sie wird bereits seit Jahren im Einzugsgebiet insbesonders von langsam fließenden oder stehenden Gewässern (z.B. am Bodensee) praktiziert und soll in Zukunft grundsätzlich für alle Kläranlagen in Mitteleuropa vom Gesetzgeber vorgeschrieben werden. Heute wird von einer Kläranlage eine Phosphatkonzentration im Ablauf von unter 1 mg/l erwartet, im Bereich eutrophiegefährdeter Gewässer liegt dieser Grenzwert noch niedriger, wobei zusätzlich auf die Abwassermenge, d.h. die Einwohnerzahl abgestellt werden muß. Kläranlagen von Kommunen, die mehr als 30.000 Einwohner zu entsorgen haben, müssen wegen des Mengeneffektes eine wirksamere Phosphateliminierung erreichen als kleinere Gemeinden.

Bekannte Verfahren zur Elimination von gelösten Phosphaten sind Fällungsreaktionen durch Zugabe von Eisen- und Aluminiumsalzen. Bisher wurden dabei saure Salze, vorzugsweise Eisenchloride, Eisensulfate, Eisenchloridsulfat, Aluminiumchlorid oder Aluminiumsulfat bzw. Kombinationsprodukte aus den genannten Verbindungen eingesetzt.

Die Verwendung von Eisen- und Aluminiumsalzen hat bei der Phosphatfällung zur Folge, daß eine zusätzliche Aufsalzung mit Chloriden und Sulfaten und darüber hinaus eine zusätzliche Erniedrigung des pH-Wertes bis in den sauren Bereich hinein erfolgt. Dies bedeutet eine zusätzliche Belastung der Abwässer durch Chloride und Sulfate und führt weiterhin zu Nachteilen bei der biologischen Abwasserreinigung, insbesondere im Hinblick auf die Nitrifizierung und Denitrifizierung von Abwässern.

Bei der Phosphatelimination mit Eisenchlorid werden nach der Gleichung:

$$FeCl_3 + PO_4^{3-} = FePO_4 + 3\ Cl^-$$
$$162,2 \qquad 95 \qquad\quad 150,8 \quad 106,4$$

für 1 mg Phosphor/l 3,4 mg Chlorid/l eingetragen. In der Praxis liegt dieser Wert um bis zu 50 % höher, weil die Eisenchlorid-Salze überschüssiges Chlorid (Salzsäure) enthalten. Somit muß bei der Fällung von z.B. 5 mg Phosphor/l mit einer zusätzlichen Belastung von 25-30 mg Chlorid/l gerechnet werden.

Ähnlich hoch liegt die Belastung von Abwasser mit Sulfaten, wenn statt der genannten Chloride Eisensulfate oder Aluminiumsulfate eingesetzt werden.

$$Fe_2(SO_4)3 + 2\ PO_4^{3-} = 2\ FePO_4 + 3\ SO_4^{2-}$$
$$399,9 \qquad\qquad 190 \qquad\quad 301,6 \qquad 288,2$$

Für 1 mg P werden 4,6 mg $SO_4$ pro Liter Abwasser eingetragen.

Bei der biologischen Reinigungsstufe kommen sogenannte Belebungsverfahren in Anwendung, bei denen das Abwasser mit belebtem Schlamm, der mit aeroben Bakterien besiedelt ist, angereichert wird. Das mechanisch vorgeklärte und von absetzbaren Stoffen weitgehend befreite Abwasser wird mit Belebtschlamm gemischt und durchfließt innerhalb von 1-4 Stunden belüftete Belebungsbecken, deren Inhalt zur Vermeidung von Ablagerungen ständig umgewälzt wird. Ausgehend von einem biologischen Sauerstoffbedarf $BSB_5$ von 1,8 kg/m³ bei schwachbelasteten und von 3,6 kg/m³ bei hochbelasteten Belebtsystemen werden Reinigungswirkungsgrade von 85-90 % bzw. 60-80 % erreicht.

Man hat bereits versucht, die Phosphate als Calciumphosphat bzw. Apatit aus den Abwässern auszufällen, wobei meistens eine mechanisch-biologische Abwasserreinigung mit dem Zusatz von Natronlauge bzw. Calciumhydroxid gekoppelt und der pH-Wert auf Werte über 9 angehoben wird, damit Calciumphosphat aufällen kann. Problematisch an diesen Verfahren ist die Bildung von schwer auszufällenden bzw. abzutrennenden Feinstpartikeln und die Beladung der Wasserphase mit Ca-Ionen, die zu Steinbildung und Ablagerungen an unerwünschten Anlageteilen führen können.

Im sogenannten Aktivtonerde-Verfahren wird feste Tonerde zur Adsorption von Phosphaten eingesetzt, wobei man meistens im sauren pH-Bereich arbeitet. Das Phosphat wird dann von dem Absorbens gelöst und über Calciumphosphatfällung weiterverarbeitet.

Bei dem Verfahren der EP-A 291 556 wird das Phosphat als Calciumphosphat entfernt. Hierbei wird ein Erdalkalicarbonat in einer Menge von mindestens 1 g/l Wasser als Abscheidehilfsmittel und gelöstes Calciumhydroxid in einer Menge eingesetzt, mit der der pH-Wert auf 9 bis 10 eingestellt werden kann. Trotz guter Ergebnisse hinsichtlich der Phosphateliminierung hat dieses Verfahren den Nachteil, daß erhebliche Mengen an Calciumkationen eingeschleust werden, die Ursache für Steinbildung und Ablagerungen sein können.

Der Erfindung liegt die Aufgabe zu Grunde, ein Phosphateliminierungsverfahren für Abwasser, insbesondere in Kläranlagen bereitzustellen, das neben wirksamer Phosphateliminierung eine Aufsalzung des Abwassers vermeidet, einen möglichst geringen Fällungsaustrag erzeugt und die Wasserbedingungen möglichst so einstellt, daß gleichzeitig oder versetzt durchgeführte Klärstufen, insbesondere die biologisch-mechanische Klärung günstig unterstützt werden.

Hierzu schlägt die Erfindung das Verfahren nach Anspruch 1 mit bevorzugten Ausgestaltungen nach den Unteransprüchen 2 bis 11 vor.

Beim erfindungsgemäßen Verfahren wird zur Fällungsreinigung eine alkalisch stabilisierte Tonerdelösung eingesetzt. Hierunter ist eine Lösung zu verstehen, in der das stöchiometrische $Na_2O:Al_2O_3$-Verhältnis von 1:1 auf Molbasis überschritten ist, d.h. größer als 1 und vorzugsweise größer als 1,5 ist. Der bevorzugte Bereich liegt zwischen 1,5 und 3,0.

Abwasser oder Zulaufwasser kann ein beliebiges Wasser sein, das mit Phosphat kontaminiert ist. Haupteinsatzgebiet der Erfindung ist jedoch die Abwasserreinigung bei Kläranlagen. Insbesondere eignet sich das erfindungsgemäße Verfahren bei Reinigungsstufen der mechanisch-biologischen Klärung, ggf. mit nachgeschalteter Nachklärung, da die alkalische Natriumaluminatlösung überraschenderweise zusätzlich zu der wirksamen Phosphatfällung eine schwache Alkalisierung des Wassers herbeiführt, die optimale Konditionen für eine wirksame Bakterienaktivität schafft.

Der Zusatz der alkalisch stabilisierten Tonerdelösung führt gemäß folgender Reaktionsgleichung zur Fällung von unlöslichem Aluminiumphosphat:

$$PO_4^{3-} + Na\,(Al(OH)_4) \qquad AlPO_4 + NaOH + 3\,OH^-$$

Der besondere Wert der Erfindung liegt darin, daß für die Phosphatfällung ein alkalisch gelöstes Aluminiumsalz, bevorzugt in Form von Natriumaluminat aus alkalisch gelöster Tonerde eingesetzt wird. Reines Natriumaluminat, welches durch Auflösen von Aluminiumhydrat in Natronlauge gewonnen wird, hat den Nachteil, daß es bei Temperaturerniedrigung sehr schnell auskristallisiert und als Fällungsmittel in Kläranlagen insbesondere im Winter nur schwierig zu handhaben ist.

Technische Natriumaluminatlösung hat in der Regel ein $Al_2O_3 : Na_2O$-Gewichtsverhältnis von 1 : 0,6 - 0,8, d.h. ca. 25 % $Al_2O_3$ kommen auf ca. 20 % $Na_2O$. Das erfindungsgemäße Verfahren setzt bevorzugt eine alkalisch gelöste Tonerde ein, bei der ein umgekehrtes Verhältnis, d.h. ein deutlicher Überschuß an $Na_2O$ bzw. Natronlauge vorliegt. Bevorzugt sind ca. 12 % $Al_2O_3$ und ca. 18 % $Na_2O$ enthalten. Dadurch erhöht sich bei der Anwendung in biologischen Kläranlagen der pH-Wert, was von großem Vorteil ist. Da bevorzugt eine alkalisch stabilisierte Tonerdelösung verwendet wird, die eigentlich ein Vorprodukt und durch Aufschluß von Bauxit hergestellt worden ist, ergibt sich aufgrund der zusätzlichen Inhaltsstoffe und eines speziellen Verhältnisses von $Al_2O_3$ und $Na_2O$ eine günstige Stabilisierung der Aluminatlösung.

Das Verhältnis von $Al_2O_3$ und $Na_2O$ soll bevorzugt bei etwa 1 : 1,2 liegen, d.h. etwa 170 g/l $Al_2O_3$ entsprechen etwa 200 g/l $Na_2O$.

Das erfindungsgemäße Verfahren wird mit besonderem Vorteil bei Kläranlagen angewendet. Es führt zu verbesserter Leistung der Kläranlage durch Erhöhung der spezifischen Abbaurate. Gleichzeitig werden verstärkt Trübstoffe aus dem geklärten Wasser entfernt. Außerdem kommt es zu einer Verminderung der organischen Restverschmutzung, was sich in einer Verminderung des CSB-Gehaltes ausdrückt. Insgesamt resultiert eine deutliche Verbesserung der Abwasserqualität.

Überraschenderweise hat sich weiterhin gezeigt, daß durch in der Lauge gelöste organische Substanzen das Einarbeiten der polymeren Wirksubstanz erleichtert wird. Die polymere Wirksubstanz besteht bevorzugt aus einem Homopolymerisat von Acrylsäure und einem Copolymerisat von Acrylamid und Natriumacrylat. Dabei beträgt der Anteil an Natriumacrylat, bezogen auf das Copolymerisat, 10-80 Mol-% und vorzugsweise 20-40 Mol-%.

Überraschend ist, daß das Polymerisat trotz der Alkalität und hohen Konzentration der Aluminatlauge seine Wirkung beibehält. Diese Wirkung liegt darin, daß bei der Anwendung des Aluminat-Polymerisat-Gemisches bei einer Dosierrate von 50 - 500 mg/l und vorzugsweise 50 - 200 mg/l, je nach Phosphatgehalt im Abwasser, sich Aluminiumphosphat bzw./und Aluminiumhydroxid bildet, welches durch die Anwesenheit des zusätzlichen Polymerisates erheblich schneller agglomeriert und sedimentiert. Bisher ging man davon aus, daß die Anwendung von Aluminiumsalzen für die Hydroxid- oder Phosphatfällung ungünstiger ist, im Vergleich zur Anwendung entsprechender Eisensalze. Dies liegt daran, daß die sich bildenden Fällungsprodukte auf der Basis von Eisen erheblich besser agglomerieren und sedimentieren, während die sich bildenden Fällungsprodukte auf der Basis von Aluminium aufgrund ihrer gallertartigen Struktur leichter sind und wesentlich schlechter sedimentieren und aus diesem Grunde eine bisher nur begrenzte Anwendung in der Abwasserklärung erlangt haben. Die positive Wirkung des Polymerisates bei der Aluminiumhydroxid-/Phosphatfällung in einem Vergleich deutlich, der mit und ohne Copolymerisat-Zusatz ausgeführt wird.

Das beschriebene Verfahren hat weiterhin den Vorteil, daß es bei der Anwendung der alkalisierten Tonerde und der Bildung von Aluminiumphosphat zu keiner weiteren Aufsalzung des Systems kommt, weil der Eintrag von Chloriden und Sulfaten ausgeschlossen ist. Außerdem kommt es zu keiner pH-Wert-Reduzierung, sondern zu einer geringfügigen Erhöhung des pH-Wertes, insgesamt also zu erheblich umweltfreundlicheren Nebeneffekten.

Ein weiterer positiver Nebeneffekt ist der um ca. 20% geringere Anfall an Phosphat-Fällungsprodukten im Vergleich zu Eisensalzen oder auch Calciumhydroxid. Die Stöchiometrie der vorstehenden Reaktionsgleichungen verdeutlicht dies:

d.h. bei der Elimination von 1 mg P/l bilden sich bei Einsatz von $FeCl_3$ 4,86 mg/l $FePO_4$-Schlamm, bei Einsatz von alkalischer Tonerdelösung jedoch nur 3,93 mg/l Aluminiumphosphat-Schlamm.

Die Erfindung hat insofern erhebliche ökologische und ökonomische Vorteile, weil in Zukunft in Mitteleuropa mit einer zu eliminierenden Phosphatmenge von ca. 100.000 t P/a zu rechnen ist. Im Vergleich zu Metallsalzen auf der Basis von Chloriden und Sulfaten (insbesondere Eisenchlorid) resultiert daraus folgende Bilanz:

100.000 to Phosphor pro Jahr

| erfordern | - 1,308 Mio to $FeCl_3$-Lsg. (40%) |
|---|---|
| oder | - 1.242 to alkalische Tonerdelösung (7% Al) |
| bilden | - 340.000 to Chloride und 486.000 to Eisenphosphat |
| oder | - keine Chloride und 393.000 to Aluminiumphosphat. |

Die folgenden Beispiele erläutern die Erfindung. Das erfindungsgemäß eingesetzte Fällungsmittel (ALTON) enthält etwa 7 Gew.-% Al und hat eine $Na_2O$-Konzentration von etwa 200 g/l. Der Polycarbonsäurezusatz beträgt ca. 0,5 Gew.-% Oxalsäure und als Flockungsadditiv sind etwa 0,2 Gew.-% Acrylamid/Acrylsäurecopolymerisat (etwa 70:30) enthalten.

Beispiel 1

Mit Abwasser eines Klärwerkes wurden Verschiedene Tests mit ALTON im Vergleich zu Eisenchlorid ($FeCl_3$-Lösung, 40%ig) durchgeführt.

Jeweils 1 Liter Abwasser aus dem Ablauf der Vorklärung wurde mit verschiedenen Konzentrationen der Fällmittel versetzt und gerührt. Nach 1 Stunde wurde das Abwasser filtriert und das Filtrat analysiert (Tab. I)

## Tabelle I

R e s u l t a t e[*]

| | pH-Wert | m-Wert mval/l | Härte grd.dH. | Phosphor mg/l |
|---|---|---|---|---|
| ohne Fällungsmittel | 7,7 | 6,9 | 16,2 | 5,5 |
| + 25 ppm Alton | 7,9 | 7,0 | 16,0 | 3,9 |
| + 50 ppm Alton | 8,1 | 7,1 | 15,9 | 2,1 |
| + 75 ppm Alton | 8,3 | 7,4 | 15,3 | 1,2 |
| + 100 ppm Alton | 8,5 | 7,6 | 14,7 | 0,8 |
| + 125 ppm Alton | 8,7 | 7,9 | 14,3 | 0,6 |

|  | pH-Wert | m-Wert mval/1 | Härte grd.dH. | Phosphor mg/1 |
|---|---|---|---|---|
| + 25 ppm FeCl$_3$ | 7,6 | 6,6 | 16,3 | 4,4 |
| + 50 ppm FeCl$_3$ | 7,5 | 6,5 | 16,3 | 2,5 |
| + 75 ppm FeCl$_3$ | 7,3 | 6,2 | 16,2 | 1,0 |
| + 100 ppm FeCl$_3$ | 7,2 | 5,9 | 16,1 | 0,7 |
| + 125 ppm FeCl$_3$ | 7,1 | 5,6 | 16,2 | 0,4 |

\* ppm Angaben beziehen sich auf die gesamte Fällmittellösung

### Entwicklung des pH-Wertes:

Durch Einsatz von ALTON steigt der pH-Wert leicht an, durch Zugabe von saurer Eisenchloridlösung sinkt der pH-Wert. Das gleiche gilt für den m-Wert, der ein Maß für die Säurekapazität und das Puffervermögen des Wassers ist.

### Entwicklung der Gesamthärte:

Durch Einsatz von ALTON sinkt die Gesamthärte. Dies ist ein Zeichen dafür, daß sich durch die Erhöhung des pH-Wertes zusätzlich Calciumphosphat oder Calciumcarbonat bildet. Beim Einsatz von Eisenchlorid verändert sich die Härte nur unwesentlich.

### Entwicklung des Phosphatgehaltes:

Mit ansteigender Zugabemenge der Fällmittel konnte der Phosphorgehalt reduziert werden. ALTON ergab bereits bei niedriger Dosierrate eine gute Wirksamkeit, während Eisenchlorid erst bei hoher Dosierung wirksamer wird. Bezogen auf Al bzw. Fe zeigt sich, daß bei gleicher Molmenge das Aluminium im Aluminat bedeutend wirksamer ist.

### Vergleichsversuch

In der Belebtstufe einer biologischen Kläranlage wird Abwasser belüftet. Infolge der von Mikroorganismen unterstützten Oxidation entstehen dabei u.a. Kohlensäure und organische Säuren, die jeweils den pH-Wert senken, bzw. eine Erhöhung des pH-Wertes verhindern.

Wasser oder Abwasser befindet sich infolge von gelöster Kohlensäure in einem natürlichen Kalk-Kohlensäuregleichgewicht. Durch Belüftung von Wasser (z.B. in Kühltürmen) entweicht Kohlensäure, so daß sich das Kalk-Kohlensäuregleichgewicht verschiebt und sich Calciumcarbonat oder Calciumphosphat abscheiden können. In der Kühlwasseraufbereitung ist dies ein bekanntes Phänomen.

Ein Liter Abwasser wurden belüftet. Die Entwicklung des pH-Wertes wurde über eine Messelektrode mit Schreiber registriert. In Abständen wurden Proben entnommen, filtriert und analysiert.

Durch Belüftung von Abwasser (ohne Belebtschlamm) verändert sich erwartungsgemäß das Kalk-Kohlensäuregleichgewicht, weil die sog. "zugehörige Kohlensäure" ausgetrieben wird. Dadurch steigt die Alkalität bzw. der pH-Wert des Wassers, so daß gelöste Hydrogencarbonate oder Hydrogenphosphate als Calciumsalze ausfallen. Bereits nach kurzer Zeit ist ein deutlicher Phosphatschwund eingetreten. Aufgrund der Löslichkeitsgleichgewichte von Calciumphosphat und Calciumcarbonat in Abhängigkeit des pH-Wertes und der m-Alkalität ist dies leicht nachvollziehbar. Eine pH-Wert-Senkung während der Fällungsreaktion würde die mikrobiologische Reinigung erheblich beeinträchtigen.

Die in der Wasseraufbereitung und insbesondere in der Kühlwassertechnologie bekannten Gleichgewichte, treffen also auch für Abwasser zu. In einer biologischen Reinigungsstufe stellen sich jedoch andere Gleichgewichte ein, weil durch die Mikroorganismen zusätzlich (freie) Kohlensäure gebildet wird.

Beispiel 2

Um den Einfluß von Fällungsmitteln in der Belebung unter Berücksichtigung des Kalk-Kohlensäuregleichgewichtes zu überprüfen, wurde eine weitere Versuchsserie durchgeführt. Dabei wurde Abwasser aus der Vorklärung sowie ein Gemisch mit Rücklaufschlamm aus der Belebung (1:1) mit und ohne Konditionierung von Fällungsmitteln für 4 Stunden belüftet.

Tabelle II faßt die Ergebnisse zusammen.

## Tabelle II

| ohne Belüftung | pH-Wert | m-Wert mval/l | Härte grd.dH. | Phosphor mg/l |
|---|---|---|---|---|
| Abwasser Vorklärung | 7,7 | 3,5 | 18,0 | 5,0 |
| Rücklaufschlamm Belebung | 6,8 | 1,3 | 16,6 | 6,2 |
| Mischung 1:1 | 7,2 | 2,5 | 17,0 | 5,5 |
| Abwasser Vorklärung | 7,7 | 3,5 | 18,0 | 5,0 |
| + 60 ppm FeCl$_3$ | 7,3 | 3,2 | 17,6 | 2,2 |
| + 60 ppm ALTON | 8,0 | 3,6 | 17,2 | 2,7 |
| Mischung 1:1 | 7,2 | 2,5 | 17,0 | 5,5 |
| + 60 ppm FeCl$_3$ | 6,9 | 2,2 | 15,6 | 3,2 |
| + 60 ppm ALTON | 7,4 | 2,6 | 14,6 | 3,0 |

| nach 4 Std. Belüftung | pH-Wert | m-Wert mval/1 | Härte grd.dH. | Phosphor mg/1 |
|---|---|---|---|---|
| Abwasser Vorklärung | 8,4 | 3,6 | 17,6 | 4,2 |
| + 60 ppm FeCl$_3$ | 8,4 | 3,2 | 16,9 | 1,9 |
| + 60 ppm ALTON | 8,4 | 3,7 | 15,8 | 2,3 |
| Mischung 1:1 | 7,5 | 1,4 | 16,0 | 5,0 |
| + 60 ppm FeCl$_3$ | 7,5 | 1,1 | 14,6 | 2,7 |
| + 60 ppm ALTON | 7,7 | 1,7 | 14,0 | 2,4 |

Entwicklung des pH-Wertes:

Infolge der säureproduzierenden Bakterienaktivität liegt der pH-Wert im Rücklaufschlamm mit 6,8 im leicht sauren Bereich. Mit Mischung mit Abwasser liegt der pH-Wert bei 7,2 und ändert sich durch Belüftung nur nach 7,5, während der pH-Wert mit reinem Wasser durch Belüftung von 7,7 nach 8,4 ansteigt.

Durch Einsatz von ALTON steigt der pH-Wert leicht an, durch Zugabe von saurer Eisenchloridlösung sinkt der pH-Wert. Das gleiche gilt für den m-Wert, der sich durch Belüftung bei Zugabe von FeCl$_3$ bis auf 1,1 reduziert.

Entwicklung der Gesamthärte:

Durch Einsatz von ALTON und infolge der Belüftung sinkt die Gesamthärte, ein Zeichen dafür, daß sich durch die Gleichgewichtsverschiebung des Abwassers Calciumphosphat oder Calciumcarbonat bildet.

Entwicklung des Phosphatgehaltes:

Allein durch die Belüftung wird der Phosphatgehalt bereits reduziert. Durch Zugabe von alkalisiertem ALTON erfolgt eine weitergehende Phosphatelimination als durch Zugabe von saurem Eisenchlorid. Die Dosierrate der Fällungsmittel wurde bewußt niedrig gehalten, um die Reaktionen im Zusammenhang mit dem Kalk-Kohlensäuregleichgewicht des Abwassers besser beobachten zu können.

Durch die Belüftung und durch die Belebtschlammaktivität wird das Kalk-Kohlensäuregleichgewicht von Abwasser nach den bekannten Gesetzmäßigkeiten verändert. Dies hat Auswirkungen auf den pH-Wert, die Säurekapazität (m-Wert), den Calciumhaushalt und auf die Phosphatelimination. Theoretisch reichen 1 grd. deutsche Härte (= 10 mg CaO/l) aus, um 3,7 mg P/l als Calciumphosphat zu fällen, wenn der pH-Wert entsprechend hoch ist.

Wird nun zur Phosphatelimination mit sauren Salzen gearbeitet, so bewirken diese, besonders bei der Simultanfällung und bei weichen Wässern, eine zusätzliche Säurebelastung der Biologie.

Bei Anwendung der alkalischen Tonerdelösung ALTON ist die Wirkung, insbesondere bei der Simultanfällung multifunktionell:

    – Aluminiumionen fällen Phosphate,
    – die Säurepufferkapazität des Wassers wird erhöht,
    – Calciumionen werden für die Phosphatfällung mitgenutzt,
    – es findet keine zusätzliche Aufsalzung durch Chloride statt.

Beispiel 3

Auf einer Kläranlage (Abwasserzulauf ca. 2400 m³/Tag) wurde zur Phosphatfällung ALTON eingesetzt. Das Produkt wurde in den Einlauf zum Belebungsbecken in konzentrierter Form mit einer kleinen Exzenterschnek-kenpumpe dosiert. Die Dosierrate wurde stufenweise von 12 kg ALTON pro Stunde (ca. 120 ppm) auf 6 kg pro Stunden (ca. 60 ppm) gesenkt.

Bereits nach einem Tag zeigten sich positive Auswirkungen auf den gesamten Betriebsablauf der Kläranlage. Es konnte nicht nur der Phosphorgehalt von ca. 5 ppm auf ca. 0,5 ppm gesenkt werden, gleichzeitig verbesserte sich die CSB-Abbaurate in der Biologie sowie die Ablaufqualität des Abwassers in der Nachklärung. Der CSB-Gehalt konnte von über 110 ppm auf ca. 80 ppm im Ablauf der Kläranlage reduziert werden.

## Tabelle III

| Abwasserproben bei Trockenwetter | ph-Wert | CSB mg/l | Phosphor mg P/l | Dosierung mg/l |
|---|---|---|---|---|
| 21.12.- 10.01 | | | | ohne |
| Einlauf Belebung | 7,8 | 601 | 6,0 | |
| Auslauf Kläranlage | 7,4 | 113 | 4,9 | |
| 11.01.- 16.01 | | | | 120 ppm |
| Einlauf Belebung | 7,8 | 592 | 8,0 | |
| Auslauf Kläranlage | 7,6 | 84 | 0,4 | |
| 17.01.- 23.01 | | | | 90 ppm |
| Einlauf Belebung | 7,7 | 525 | 4,9 | |
| Auslauf Kläranlage | 7,5 | 82 | 0,4 | |
| 24.01.- 30.01 | | | | 60 ppm |
| Einlauf Belebung | 7,8 | 474 | 5,6 | |
| Auslauf Kläranlage | 7,5 | 87 | 0,8 | |

*mg P/l = gesamt P

Die Resulate sind insofern beeindruckend, da die relativ kleine Kläranlage mit einer industriellen Schmutzwasserfracht von ca. 50 % am Rande der Leistungsfähigkeit betrieben wurde.

Beispiel 4

Der Einfluß des ALTON auf die absetzbaren Stoffe in ml/l (am Beispiel einer kommunalen Kläranlage) ist beeindruckend:

| Datum | CSB | Absetzbare Stoffe ml/l |
|---|---|---|
| 26.01. | 133 | 1,8 |
| 27.01. | 144 | 2,5 |
| 29.01. | 126 | 2,5 |
| 30.01. | 132 | 2,5 |
| 31.01. | 113 | 1,8 |
| 01.02. | 113 | 1,5 |
| 02.02. | 95 | 0,1 |

Dosierbeginn:  29.01.1989

Dosiermenge:  ALTON  75 mg/l Abwasser

**Patentansprüche**

1. Verfahren zur Eliminierung von Phosphaten und organisch gebundenem Phosphor aus Abwässern und Zulaufwässern durch Fällungsreinigung mit Al-haltigen Fällungsmitteln, dadurch gekennzeichnet, daß das Abwasser oder Zulaufwasser unter Zusatz einer alkalisch stabilisierten Tonerdelösung gereinigt wird, die durch alkalischen Aufschluß von Bauxit und/oder als alkalische Aluminiumbeizlauge erhalten wird und ein stöchiometrisches Molverhältnis von $Na_2O:Al_2O_3$ größer als 1:1 aufweist.

2. Verfahren nach Anspruch 1, dadurch gekennzeichnet, daß als Fällungsmittel eine alkalisch stabilisierte Tonerdelösung mit einem $Na_2O/Al_2O_3$-Molverhältnis von 1,5 bis 5.0 zugesetzt wird.

3. Verfahren nach Anspruch 1 oder 2, dadurch gekennzeichnet, daß alkalische Aluminiumbeizlauge mit Bauxitaufschlußlauge kombiniert eingesetzt wird.

4. Verfahren nach einem der Ansprüche 1 bis 3, dadurch gekennzeichnet, daß die alkalisch stabilisierte Tonerdelösung einen $Al_2O_3$-Gehalt von 100 bis 300 g/l und bevorzugt von 150 bis 200 g/l aufweist.

5. Verfahren nach einem der Ansprüche 1 bis 4, dadurch gekennzeichnet, daß die alkalisch stabilisierte Tonerdelösung einen $Na_2O$-Gehalt von 100 bis 400 g/l und bevorzugt von 200 bis 250 g/l aufweist.

6. Verfahren nach einem der Ansprüche 1 bis 5, dadurch gekennzeichnet, daß die alkalisch stabilisierte Tonerdelösung in einer Menge von 10 bis 200 mg und bevorzugt von 50 bis 100 mg pro Liter Abwasser zudosiert wird.

7. Verfahren nach einem der Ansprüche 1 bis 6, dadurch gekennzeichnet, daß die alkalisch stabilisierte Tonerdelösung einen Polycarbonsäure-Zusatz von 0,1 bis 1,0 Gew.-% und bevorzugt von etwa 0,5 Gew.-% enthält.

8. Verfahren nach einem der Ansprüche 1 bis 7, dadurch gekennzeichnet, daß die alkalisch stabilisierte Tonerdelösung außerdem ein polymeres Flockungsadditiv auf der Basis von organischen Polyelektrolyten, insbesondere auf der Basis von Acrylamid/Acrylsäure-Copolymerisaten, in einer Menge von 0,1 bis 1,0 Gew.-%, bezogen auf die Tonerdelösung, und bevorzugt in einer Menge von 0,2 bis 0,5 Gew.-% enthält, wobei das polymere Flockungsadditiv dem Abwasser zumindest teilweise auch getrennt zugesetzt werden kann.

9. Verfahren nach einem der Ansprüche 1 bis 8, dadurch gekennzeichnet, daß das polymere Flockungsadditiv auf Basis von Acrylamid/Acrylsäure-Copolymerisat 10 bis 80 Mol-% und vorzugsweise 20 bis 40 Mol-% Acrylsäureeinheiten aufweist.

10. Verfahren nach einem der Ansprüche 1 bis 9, <u>dadurch gekennzeichnet</u>, daß das Abwasser einer Kläranlage gereinigt wird und die Fällungsreinigung insbesondere zur Simultanfällung in einer biologischen Reinigungsstufe einer Kläranlage angewendet wird, wobei man vorzugsweise unter Belüftung reinigt.

11. Verfahren nach Anspruch 10, <u>dadurch gekennzeichnet</u>, daß die alkalisch stabilisierte Tonerdelösung zur Phosphatfällung in einer Vorklärstufe oder in einer Nachklärstufe zugesetzt wird.

## Claims

1. A method of eliminating phosphates and organically bonded phosphorous from effluent and feed water by precipitation purification using precipitating agents which contain Al, characterised in that the waste water or feed water is purified by the addition of an alkalinically stabilised alumina solution which is obtained by the alkaline decomposition of bauxite and/or as an alkaline aluminium pickling liquor and which has a stoechiomet-ric molar ratio of $Na_2O:Al_2O_3$ which is greater than 1:1.

2. A method according to Claim 1, characterised in that an alkalinically stabilised alumina solution having an $Na_2O:Al_2O_3$ molar ratio of 1.5 to 5.0 is added as a precipitating agent.

3. A method according to Claim 1 or 2, characterised in that alkaline aluminium pickling liquor is used in combination with bauxite decomposing liquor.

4. A method according to one of Claims 1 to 3, characterised in that the alkalinically stabilised alumina sol-ution has an $Al_2O_3$ content of 100 to 300 g/l and preferably 150 to 200 g/l.

5. A method according to one of Claims 1 to 4, characterised in that the alkalinically stabilised alumina sol-ution has an $Na_2O_3$ content of 100 to 400 g/l and preferably 200 to 250 g/l.

6. A method according to one of Claims 1 to 5, characterised in that the alkalinically stabilised alumina solution is admixed in a quantity of 10 to 200 mg and preferably 50 to 100 mg per litre of waste water.

7. A method according to one of Claims 1 to 6, characterised in that the alkalinically stabilised alumina solution has a polycarboxylic acid additive of 0.1 to 1% by weight and preferably approx. 0.5% by weight.

8. A method according to one of Claims 1 to 7, characterised in that the alkalinically stabilised alumina solution furthermore contains a polymeric flocculation additive based on organic polyelectrolytes, particularly based on acrylamide/acrylic acid copolymers, in a quantity of 0.1 to 1% by weight in relation to the alumina solution, and preferably in a quantity of 0.2 to 0.5% by weight, the polymeric flocculation additive possibly being added at least partially separately to the waste water.

9. A method according to one of Claims 1 to 8, characterised in that the polymeric flocculation additive based on acrylamide/acrylic acid copolymer contains 10 to 80 mol % and preferably 20 to 40 mol % acrylic acid units.

10. A method according to one of Claims 1 to 9, characterised in that the waste water from a clarification plant is cleansed and in that the precipitation purification is in particular applied for simultaneous purification in a biological cleansing stage of a clarification plant, purification preferably being carried out under ventilation.

11. A method according to Claim 10, characterised in that the alkalinically stabilised alumina solution is for phosphate precipitation added in a pre-clarifying stage or in a secondary clarifying stage.

## Revendications

1. Procédé pour l'élimination de phosphates et de phosphore lié par voie organique d'eaux usées et d'eaux d'alimentation en procédant à une purification par précipitation avec des agents de précipitation à teneur en Al, **caractérisé en ce qu**'on purifie les eaux usées ou les eaux d'alimentation par addition d'une solution d'alumine stabilisée par voie alcaline, que l'on obtient par attaque alcaline de bauxite et/ou sous forme de lessive alcaline d'attaque d'aluminium et qui présente un rapport stoechiométrique molaire $Na_2O:Al_2O_3$ supérieur à 1:1.

2. Procédé selon la revendication 1, **caractérisé en ce qu**'on ajoute, comme agent de précipitation, une solution d'alumine stabilisée par voie alcaline et ayant un rapport molaire $Na_2O/Al_2O_3$ de 1,5 à 5,0.

3. Procédé selon la revendication 1 ou 2, **caractérisé en ce qu**'on met en oeuvre une lessive alcaline d'attaque d'aluminium combinée avec une lessive d'attaque de bauxite.

4. Procédé selon l'une quelconque des revendications 1 à 3, **caractérisé en ce que** la solution d'alumine stabilisée par voie alcaline présente une teneur en $Al_2O_3$ de 100 à 300 g/l et, de préférence, de 150 à 200 g/l.

5. Procédé selon l'une quelconque des revendications 1 à 4, **caractérisé en ce que** la solution d'alumine stabilisée par voie alcaline présente une teneur en $Na_2O$ de 100 à 400 g/l et, de préférence, de 200 à 250 g/l.

6. Procédé selon l'une quelconque des revendications 1 à 5, **caractérisé en ce que** l'on procède à une addition dosée de la solution d'alumine stabilisée par voie alcaline en une quantité de 10 à 200 mg, de préférence de 50 à 100 mg par litre d'eaux usées.

7. Procédé selon l'une quelconque des revendications 1 à 6, **caractérisé en ce que** la solution d'alumine stabilisée par voie alcaline contient un additif d'acides polycarboxyliques à raison de 0,1 à 1,0% en poids et, de préférence, d'environ 0,5% en poids.

8. Procédé selon l'une quelconque des revendications 1 à 7, **caractérisé en ce que** la solution d'alumine stabilisée par voie alcaline contient, en outre, un additif polymère de floculation à base de polyélectrolytes organiques, en particulier à base de copolymères d'acrylamide/acide acrylique, en une quantité de 0,1 à 1,0% en poids rapportée à la solution d'alumine, de préférence en une quantité de 0,2 à 0,5% en poids, l'additif polymère de floculation pouvant également être ajouté aux eaux usées au moins partiellement de manière séparée.

9. Procédé selon l'une quelconque des revendications 1 à 8, **caractérisé en ce que** l'additif polymère de floculation à base de copolymère d'acrylamide/acide acrylique présente 10 à 80 moles-% et, de préférence, de 20 à 40 moles-% d'unités d'acide acrylique.

10. Procédé selon l'une quelconque des revendications 1 à 9, **caractérisé en ce qu'**on purifie les eaux usées d'une station d'épuration et on utilise la purification par précipitation, en particulier, pour la précipitation simultanée dans une étape de purification biologique d'une station d'épuration, la purification ayant lieu, de préférence, sous aération.

11. Procédé selon la revendication 10, **caractérisé en ce qu'**on ajoute la solution d'alumine stabilisée par voie alcaline à des fins de précipitation des phosphates, au cours d'une étape de clarification préliminaire ou au cours d'une étape de clarification ultérieure.